# EUROPÄISCHE PATENTSCHRIFT

(11) **EP 3 526 005 B1**
(45) Veröffentlichungstag und Bekanntmachung des Hinweises auf die Patenterteilung: **09.08.2023**
(21) Anmeldenummer: 17784955.1
(22) Anmeldetag: 17.10.2017
(51) Int. Cl.: B29C 31/02, B29C 48/92, B29C 48/285, B29C 31/10, B29B 7/78, B29B 7/38, B29B 9/16, B29B 7/60

(54) **VERFAHREN FÜR DIE DURCHFÜHRUNG EINES MATERIALWECHSELS BEI EINER VORLAGEVORRICHTUNG EINES EXTRUDERS**
METHOD FOR CHANGING THE MATERIAL IN A FEED DEVICE OF AN EXTRUDER
PROCÉDÉ PERMETTANT DE RÉALISER UN CHANGEMENT DE MATIÈRE AU NIVEAU D'UN DISPOSITIF D'ALIMENTATION D'UNE EXTRUDEUSE

(30) Priorität: 17.10.2016 DE 102016119754
(43) Veröffentlichungstag der Anmeldung: 21.08.2019
(73) Patentinhaber: Windmöller & Hölscher KG, 49525 Lengerich (DE)
(72) Erfinder: BACKMANN, Martin, 49525 Lengerich (DE); KULGEMEYER, Tobias, 49525 Lengerich (DE); MIDDELBERG, Gerhard, 49525 Lengerich (DE)
(86) Internationale Anmeldenummer: PCT/EP2017/076511
(87) Internationale Veröffentlichungsnummer: WO 2018/073263

(56) Entgegenhaltungen:
- EP-A1- 2 939 960
- EP-A2- 0 419 903
- WO-A1-2011/007712
- WO-A1-2011/007713
- DE-A1- 4 214 081
- DE-A1-102010 028 786
- DE-A1-102013 100 812
- JP-A- S5 769 026
- JP-A- S60 110 411
- JP-A- S62 212 121
- JP-A- 2012 176 599

## Beschreibung

Die vorliegende Erfindung betrifft ein Verfahren zur Durchführung eines Materialwechsels von einer Einsatzmischung zu einer Folgemischung bei einer Vorlagevorrichtung eines Extruders sowie eine entsprechend betreibbare Vorlagevorrichtung für einen Extruder.

Es ist aus den Schriften WO 2011/007712 A1, JP S57 69026 A und JP 2012 176599 A bekannt, dass Extruder eingesetzt werden, um Materialmischungen, insbesondere aus unterschiedlichen Kunststoffgranulaten zu verarbeiten. Die Verarbeitung erfolgt bei einem Extruder üblicherweise durch einen Schneckenförderer, welcher beheizt wird. Dadurch wird innerhalb der Schnecke durch die Temperierung sowie eingebrachte Scherkräfte die entsprechende Einsatzmischung aufgeschmolzen und in einem Düsenbereich des Extruders flüssig der weiteren Verarbeitung zur Verfügung gestellt. Solche Extruder finden bei der Kunststoffverarbeitung Einsatz und werden zum Beispiel bei der Folienherstellung, insbesondere bei der Herstellung von Blasfolien, eingesetzt. Dabei können solche Extruder als einzelne Extruder oder als Extrusionsvorrichtungen mit zwei oder mehr parallel geschalteten Extrudern eingesetzt werden. Um den jeweiligen Extruder mit einer Einsatzmischung zu versorgen, sind Vorlagevorrichtungen bekannt, welche mehrteilig ausgestaltet sind. Üblicherweise wird dem Extruder die Einsatzmischung, also die Mischung aus zwei oder mehr Einsatzmaterialien über einen Übergabebereich zugeführt. Um sicherzustellen, dass eine ausreichende Durchmischung der einzelnen Einsatzmaterialien zu der Einsatzmischung vorliegt, ist es ebenfalls bekannt, eine Mischvorrichtung einzusetzen, um, zum Beispiel in mechanischer Weise, eine Durchmischung durchzuführen, bevor der Übergabebereich mit der Einsatzmischung versorgt wird. Die Mischvorrichtung wiederum erhält die Einsatzmaterialien von einer Dosiervorrichtung, mit welcher die einzelnen Volumenbestandteile bzw. Gewichtsbestandteile der einzelnen Einsatzmaterialien aufeinander abgestimmt und angepasst werden können. Die Dosiervorrichtung wiederum erhält vorgelagert von einzelnen Vorratsbehältern das jeweilige Einsatzmaterial, wobei üblicherweise jeder Vorratsbehälter sortenrein und spezifisch für ein Einsatzmaterial ausgelegt ist. Jeder Extruder ist demnach häufig mit zwei oder deutlich mehr, bis zu acht oder zehn einzelnen Vorratsbehältern ausgestattet, um auch beliebig komplexe Rezepturen und dementsprechend komplex zusammengesetzte Einsatzmischungen der einzelnen Einsatzmaterialien verarbeiten zu können.

Nachteilhaft bei den bekannten Lösungen ist es, dass der Materialwechsel sehr aufwendig ist. Unter einem Materialwechsel ist dabei zu verstehen, dass von einer Einsatzmischung auf eine Folgemischung als Rezeptur umgestellt werden soll. Eine Einsatzmischung und eine Folgemischung sind dabei definierte Zusammensetzungen in Gewichtsanteilen und in der entsprechenden Spezifität der einzelnen Einsatzmaterialien bzw. der Folgematerialien. Die Zusammensetzung der Einsatzmischung unterscheidet sich dabei von der Zusammensetzung der Folgemischung. Um bei den bekannten Lösungen einen solchen Materialwechsel durchzuführen, wird üblicherweise von dem Vorratsbehälter über den Dosierbehälter die Dosierung der neuen Folgemischung in die Mischvorrichtung durchgeführt. In der Mischvorrichtung entsteht somit über einen gewissen Zeitraum eine Vermischung der noch darin enthaltenen Einsatzmischung mit der bereits zugeführten Folgemischung. Sobald ein gewisser Übergangszeitraum abgewartet worden ist, ist der Anteil der Folgemischung in der Mischvorrichtung so groß, dass mit dem Extruder nun wieder mit der neuen Rezeptur die gewünschte Produktion gefahren werden kann. Nachteilhaft bei den bekannten Lösungen ist es jedoch, dass in der Übergangsphase, wenn also die Folgemischung noch mit der Einsatzmischung innerhalb der Mischvorrichtung durchmischt ist, das Ergebnis am Ende des Extruders nicht die gewünschten definierten Materialeigenschaften aufweist. Vielmehr wird zu diesem Zeitpunkt noch in undefinierter Weise eine Produktion durchgeführt, bei welchem das Produktionsergebnis abhängig ist von der zu diesem Zeitpunkt tatsächlich eingestellten Durchmischung zwischen der Einsatzmischung und der Folgemischung. Produktergebnisse, welche in diesem Zeitraum erzeugt werden, sind üblicherweise Ausschuss und können weder weiterverwendet werden, noch durch Regranulierung dem Gesamtsystem wieder recycelt zurückgeführt werden.

Es ist Aufgabe der vorliegenden Erfindung, die voranstehend beschriebenen Nachteile zumindest teilweise zu beheben. Insbesondere ist es Aufgabe der vorliegenden Erfindung, ihn kostengünstiger und einfacher Weise möglichst schnell und/oder möglichst sortenrein den Materialwechsel durchzuführen.

Die voranstehende Aufgabe wird gelöst durch ein Verfahren mit den Merkmalen des Anspruchs 1 sowie eine Vorlagevorrichtung mit den Merkmalen des Anspruchs 9.

Weitere Merkmale und Details der Erfindung ergeben sich aus den Unteransprüchen, der Beschreibung und den Zeichnungen. Dabei gelten Merkmale und Details, die im Zusammenhang mit dem erfindungsgemäßen Verfahren beschrieben sind, selbstverständlich auch im Zusammenhang mit der erfindungsgemäßen Vorlagevorrichtung und jeweils umgekehrt, so dass bezüglich der Offenbarung zu den einzelnen Erfindungsaspekten stets wechselseitig Bezug genommen wird bzw. werden kann.

Erfindungsgemäß wird ein Verfahren zur Durchführung eines Materialwechsels von einer Einsatzmischung zu einer Folgemischung bei einer Vorlagevorrichtung eines Extruders vorgeschlagen. Ein solches Verfahren weist die folgenden Schritte auf:
- Erkennen einer Wechselanforderung zur Durchführung des Materialwechsels,
- Leeren eines Mischbereichs einer Mischvorrichtung der Vorlagevorrichtung,
- Erkennen der Beendigung des Leerens des Mischbereichs,
- Auffüllen des Mischbereichs der Mischvorrichtung mit der Folgemischung nach der erkannten Beendigung des Leerens.

Erfindungsgemäß soll also ebenfalls ein Materialwechsel durchgeführt werden, wie dies auch bei bekannten Verfahren der Fall ist. Unter dem Materialwechsel ist also die Veränderung der eingesetzten Rezeptur im Extruder zu verstehen. Die Einsatzmischung und die Folgemischung unterscheiden sich demnach durch zumindest eine entsprechende Komponente, also ist zumindest ein Folgematerial unterschiedlich zu dem entsprechenden Einsatzmaterial. Dies kann auch dann der Fall sein, wenn die Folgemischung weniger Einzelkomponenten aufweist, als dies bei der Einsatzmischung der Fall ist. Grundsätzlich ist es jedoch auch denkbar, dass die Folgemischung mit gleicher Summe und gleicher Art der Einzelkomponenten gefahren wird, wie dies bei der Einsatzmischung der Fall ist, jedoch unterschiedliche Konzentrationen der einzelnen Komponenten eine unterschiedliche Folgemischung ergeben.

Ein Kerngedanke der vorliegenden Erfindung ist es nun, den Materialwechsel nicht mehr bei vollständig gefüllter Mischvorrichtung durchzuführen. Vielmehr wird vor dem Einbringen der Folgemischung in die Mischvorrichtung ein Mischbereich der Mischvorrichtung geleert. Unter dem Mischbereich einer Mischvorrichtung ist im Sinne der vorliegenden Erfindung der Bereich der Mischvorrichtung zu verstehen, in welchem eine Durchmischung der eingebrachten Einzelkomponenten tatsächlich stattfindet. Dabei ist darauf hinzuweisen, dass als Mischer unterschiedlichste Möglichkeiten denkbar sind. Neben mechanisch eingreifenden Schaufeln sind selbstverständlich auch Vibrationsmischer, Schneckenantriebe oder Ähnliches im Sinne der vorliegenden Erfindung denkbar. Je nachdem, welche Form eines Mischers eingesetzt ist, wird sich ein Bereich ausbilden, in dem eine tatsächliche und effektive mechanische Durchmischung der einzelnen Einzelkomponenten stattfindet. Wenn also die einzelnen Komponenten der Einsatzmischung bzw. der Folgemischung von dem jeweiligen Vorratsbehälter in den Dosierbehälter eingebracht werden, so liegen sie dort üblicherweise schichtweise aufeinanderliegend vor. Dieser Schichtaufbau wird im Wesentlichen ungemischt in die Mischvorrichtung überführt, nämlich üblicherweise durch Schwerkraftförderung abgelassen. Durch die Durchmischung im Mischbereich wird nun eine möglichst homogene Mischung erzielt, so dass die eintretende Folgemischung im Extruder möglichst homogen die gewünschten Produktionseigenschaften innerhalb des Extruders aufweist.

Erfindungsgemäß wird nun nach dem Erkennen der Wechselanforderung zur Durchführung dieses Materialwechsels ein Schritt eines Leerens dieses Mischbereichs durchgeführt. Das bedeutet also, dass nicht die komplette Mischvorrichtung entleert wird, sondern vielmehr zumindest der Bereich von Einsatzmaterial befreit wird, in welchem die Mischbewegung bzw. die Mischfunktion von der Mischvorrichtung zur Verfügung gestellt wird. Dabei kann das Leeren dieses Mischbereichs auf unterschiedlichste Weise erzeugt werden, wie dies später noch erläutert wird. Sobald nun der Mischbereich soweit geleert ist, dass sich hier kein Einsatzmaterial mehr befindet, erfolgt im abschließenden Schritt eines erfindungsgemäßen Verfahrens das Auffüllen des Mischbereichs mit der Folgemischung. Zu diesem Zeitpunkt kann unterhalb des Mischbereichs selbstverständlich noch Einsatzmischung in der Mischvorrichtung angeordnet sein. Dadurch, dass die Folgemischung jedoch nun beim Einbringen in den Mischbereich der Mischvorrichtung diesen Mischbereich vollständig ausfüllt, erfolgt die Durchmischung der Folgemischung nur noch mit sich selbst und nicht mehr mit Restbestandteilen der Einsatzmischung, wie dies bei bekannten Lösungen bisher der Fall war. Mit anderen Worten erfolgt ein Ablassen bzw. Ableeren des Füllstandes der Mischvorrichtung soweit, dass der Mischer der Mischvorrichtung sozusagen ins Leere greift. Der nun geleerte Mischbereich wird mit der Folgemischung aufgefüllt, so dass die anschließende Mischfunktion nun ausschließlich bzw. im Wesentlichen ausschließlich zur Durchmischung der sortenreinen Folgemischung dient. Die sich einstellende Phasengrenze zwischen der Folgemischung und der Einsatzmischung bleibt dementsprechend bei der Weiterförderung des gesamten Materials in Richtung des Extruders, insbesondere in einem Übergabebereich, im Wesentlichen konstant, so dass hier die Problematik der Durchmischung bei den bekannten Verfahren nur auf einen minimalen Zeitabschnitt gegeben ist. Sobald die Phasengrenze den Extruder erreicht hat, wird im Wesentlichen sortenrein von der Einsatzmischung auf die Folgemischung umgestellt, so dass innerhalb des Extruders nur noch Folgemischung den Eingang des Extruders erreichen kann.

Wie aus der voranstehenden Beschreibung ersichtlich wird, wird nun eine Vermischung zwischen Einsatzmischung und Folgemischung im Wesentlichen gänzlich vermieden. Dies führt dazu, dass ein Zeitübergangsbereich, in welchem als Produktionsergebnis eine Vermischung aus Einsatzmischung und Folgemischung erzeugt wird, auf eine minimale Zeitspanne reduziert wird. Im Vergleich zu den bekannten Lösungen sind dies mehrere Minuten bis zu einer halben Stunde. Bei jedem Materialwechsel zwischen einer Einsatzmischung und einer Folgemischung wird nun diese Zeitspanne als Zeitgewinn erzielbar. Neben dem Zeitgewinn, welcher als Ersparnis einen wirtschaftlichen Vorteil mit sich bringt, kann auch eine Reduktion an Abfall erzielt werden, so dass die eingesetzten Rohstoffe mit einer höheren Effizienz verarbeitbar sind. Die einzelnen Schritte des Verfahrens werden vorzugsweise automatisch oder teilautomatisch durchgeführt. So kann das Erkennen der Wechselanforderung z. B. durch eine Sensorik erfolgen oder durch ein Kontrollsystem vorgegeben werden. Mit einem solchen Kontrollsystem können auch Klappen oder Ventile für die Schritte des Leerens und des Auffüllens gesteuert werden.

Es kann von Vorteil sein, wenn bei einem erfindungsgemäßen Verfahren für den Schritt des Leerens des Mischbereichs wenigstens einer der folgenden Teilschritte ausgeführt wird:
- Ablassen der Einsatzmischung aus dem Mischbereich über eine Ablassöffnung
- Leerlaufen der Einsatzmischung in den Extruder

Bei der voranstehenden Aufzählung handelt es sich um eine nicht abschließende Liste. Selbstverständlich können die einzelnen Teilschritte auch miteinander kombiniert werden. Es ist denkbar, dass in einer Mischvorrichtung eine separate Ablassöffnung vorgesehen ist, um den Mischbereich von der Einsatzmischung zu befreien. Diese Ablassöffnung kann zum Beispiel mit einem entsprechenden Ablasscontainer gekoppelt sein, in welchen die Einsatzmischung ablaufen kann. Selbstverständlich ist es auch denkbar, ein kontrolliertes Leerlaufen des Mischbereichs zu gewährleisten, indem die Einsatzmischung durch die Weiterverarbeitung im Extruder einfach weiter aus der Mischvorrichtung abgezogen wird. Sobald durch die weitere Produktion des Extruders und ein fehlendes Nachfüllen in die Mischvorrichtung hinein der Füllstand in der Mischvorrichtung soweit abgesunken ist, dass durch dieses Leerlaufen nun der Mischbereich von der Einsatzmischung befreit ist, kann der finale Schritt in erfindungsgemäßer Weise, nämlich das Auffüllen des Mischbereichs mit der Folgemischung, durchgeführt werden. Durch den Schritt des Leerlaufens, insbesondere automatisch gesteuert, wird der Ausschuss bzw. der Abfall bei der Durchführung eines Materialwechsels noch weiter reduziert und damit die Effizienz bei der Verwendung eines erfindungsgemäßen Verfahrens deutlich erhöht.

Ebenfalls von Vorteil kann es sein, wenn bei einem erfindungsgemäßen Verfahren während des Auffüllens des Mischbereichs mit der Folgemischung der Mischbereich mit einem Verschlussmittel von einem Übergabebereich der Mischvorrichtung zum Extruder getrennt ist. Dabei kann das Verschlussmittel eine Art eines Ventils aufweisen, zum Beispiel als Schieber ausgebildet sein. Sobald nun der Mischbereich vom Einsatzmaterial befreit worden ist, ist der Mischbereich sozusagen leer. Um nun die bereits erläuterte Phasengrenze zwischen der Einsatzmischung und der Folgemischung möglichst exakt zu halten, wird durch ein Verschlussmittel dieser Übergabebereich, in welchem sich noch die Einsatzmischung befindet, vom Mischbereich physisch abgetrennt. Dies kann durch eine Kontrollvorrichtung automatisch geschehen. Nun erfolgt das Auffüllen mit der Folgemischung, welche durch das Verschlussmittel daran gehindert wird, in den Übergabebereich einzudringen. Der Abstand zwischen der Einsatzmischung und der Folgemischung wird auf diese Weise vergrößert bzw. die Phasengrenze zwischen der Einsatzmischung und der Folgemischung exakter ausbildbar. Nach dem Beenden des Auffüllens kann selbstverständlich eine Öffnung des Verschlussmittels erfolgen, um nun auch die Folgemischung in diesen Übergabebereich eindringen zu lassen. Dies erfolgt insbesondere noch, bevor dieser Übergabebereich vollständig leerläuft, um den Extruder kontinuierlich oder im Wesentlichen kontinuierlich mit Material zu versorgen und damit ein Leerlaufen des Extruders zu verhindern.

Bei einem Verfahren gemäß dem voranstehenden Absatz kann es vorteilhaft sein, wenn nach und/oder während dem Auffüllen mit der Folgemischung ein Mischer der Mischvorrichtung betrieben wird, um die Folgemischung zu durchmischen, insbesondere bevor das Verschlussmittel zu dem Übergabebereich geöffnet wird. Wie bereits im voranstehenden Absatz erläutert worden ist, kann durch die beschriebene Ausführungsform dieses Verfahrens die Phasengrenze zwischen der Einsatzmischung und der Folgemischung noch exakter ausgestaltet werden. Um den Betrieb noch weiter effizient zu gestalten, wird nun eine Durchmischung der einzelnen Folgematerialien, welche noch in ungemischter Form in die Mischvorrichtung gelangen, durchgeführt, bevor das Verschlussmittel geöffnet wird. Dies führt dazu, dass die einzelnen Folgematerialien, welche in undurchmischter Weise in die Mischvorrichtung gelangen, nun zuerst durchmischt werden, bevor sie über den Übergabebereich in den Extruder gelangen. Dies kann auch als ein vorzugsweise automatisches Vormischen während des Materialwechsels verstanden werden. Insbesondere dadurch, dass beim Eindringen der einzelnen Komponenten des Folgematerials in die Mischvorrichtung keine separate Durchmischung durchgeführt wird, kann nun mit dem bereits vorhandenen Mischer diese Vormischung erfolgen, so dass die Zeitspanne, in welchem nicht verkaufsfähiger Ausschuss durch den Extruder produziert wird, noch weiter reduziert wird und die Geschwindigkeit des Umschaltens zwischen der Einsatzmischung und der Folgemischung deutlich vergrößert wird.

Ein weiterer Vorteil ist es, wenn bei einem erfindungsgemäßen Verfahren vor dem Beginn des Auffüllens des Mischbereichs mit der Folgemischung der Mischbereich, insbesondere ein Mischer im Mischbereich, gereinigt wird. Eine Reinigung kann dabei durch unterschiedlichste Methoden einzeln oder in kombinierter Weise durchgeführt werden. So kann mit Luftdruck, Saugmechanismen, Klopfen, Vibration, Ultraschall, einem Antrieb eines Mischers oder in manueller Weise die Reinigung durchgeführt werden. Damit kann nicht nur eine Verschmutzung innerhalb der Mischvorrichtung, sondern auch das Entstehen von Staub deutlich reduziert werden. Auch separate Ausblasöffnungen nach außen oder die Absaugung von Staub sind im Rahmen einer solchen Reinigung denkbar. Selbstverständlich kann ein solcher Reinigungsvorgang auch dann durchgeführt werden, wenn kein Materialwechsel erfolgen soll. So ist es selbstverständlich denkbar, auch während eines laufenden Prozesses in einer Einsatzmischung den Mischbereich in entsprechender Weise zu leeren, den Reinigungsvorgang durchzuführen, und abschließend wieder ein Auffüllen im Mischbereich mit der weiter betreibbaren Einsatzmischung durchzuführen. Das Reinigen erfolgt insbesondere durch automatische oder teilautomatische Reinigungsvorrichtungen.

Bei dem erfindungsgemäßen Verfahren wird der

Füllstand in einem Übergabebereich der Mischvorrichtung zum Extruder überwacht, wobei bei einer Unterschreitung eines Mindestfüllstandes in dem Übergabebereich wenigstens einer der folgenden Schritte durchgeführt wird:
- sofortiges Auffüllen des Mischbereich und/oder des Übergabebereichs
- Reduktion der Produktionsgeschwindigkeit des Extruders
- Stopp der Produktion des Extruders

Um eine Produktionssicherheit zu gewährleisten, ist es erwünscht, dass der Extruder in keiner Prozesssituation leerläuft. Insbesondere mithilfe von Sensoren wird dementsprechend der Füllstand im Übergabebereich automatisch überwacht. Dabei sind unterschiedliche Notmechanismen denkbar, um einen Mindestfüllstand im Übergabebereich sicherzustellen, so dass das Leerlaufen des Extruders wirkungsvoll vermieden wird. Selbstverständlich können die einzelnen Notmechanismen auch frei miteinander kombiniert werden. Der Stopp der Produktion des Extruders ist dabei das letzte Mittel, um mögliche Beschädigungen innerhalb des Extruders oder in der Produktion zu vermeiden. Ein sofortiges Auffüllen des Mischbereichs mit Einsatzmischung oder mit Folgemischung ist dabei üblicherweise die erste Wahl. Gleiches gilt auch für die Reduktion der Produktionsgeschwindigkeit des Extruders ohne, dass die Produktionsfähigkeit des Extruders oder nachgelagerter Einheiten oder Bauteile dadurch beeinträchtigt werden würde.

Ein weiterer Vorteil ist es, wenn bei einem erfindungsgemäßen Verfahren während der Durchführung der Schritte des Leerens des Mischbereichs und/oder des Auffüllens des Mischbereichs die Produktionsgeschwindigkeit des Extruders reduziert wird. Ein Kontrollsystem kann dies automatisch oder teilautomatisch durchführen. Mit anderen Worten wird also für die Durchführung des Leerens die Extrusionsgeschwindigkeit abgesenkt, um eine größere Zeitspanne zu schaffen, um das Auffüllen des Mischbereichs zur Verfügung zu stellen. Insbesondere, wenn der Übergabebereich relativ klein ausgestaltet ist bzw. mit hohen Produktionsgeschwindigkeiten gefahren wird, führt dies zu relativ kurzen Pufferzeiten, in welchem der Übergabebereich noch ausreichend Material für den Extruder zur Verfügung stellt. Die Reduktion der Produktionsgeschwindigkeit für die Durchführung des Materialwechsels erhöht dementsprechend diese Pufferzeit, ohne dass eine mechanische Veränderung für eine Volumenvergrößerung in dem Übergabebereich durchgeführt werden muss. Die entsprechende Dauer für diesen Materialwechsel, insbesondere für das Auffüllen, liegt dabei üblicherweise im Bereich von 20 bis 30 Sekunden, so dass insbesondere zusätzlich noch ein Reinigungsschritt in der beschriebenen Weise durchgeführt werden kann.

Bei dem erfindungsgemäßen Verfahren, wird vor dem Leeren des Mischbereichs wenigstens einer der folgenden Schritte, insbesondere in der nachfolgenden Reihenfolge, durchgeführt wird:
- Leeren wenigstens eines Vorratsbehälters, welcher der Mischvorrichtung vorgelagert ist
- Auffüllen des Vorratsbehälters mit einem Folgematerial für die Folgemischung
- Leeren eines Dosierbehälters, welcher der Mischvorrichtung vorgelagert und dem Vorratsbehälter nachgelagert ist
- Auffüllen des Dosierbehälters aus dem wenigstens einen Vorratsbehälter mit dem Folgematerial der Folgemischung

Bei der durchlaufenden Abarbeitung der voranstehenden Schritte erfolgt also ein kaskadiertes Auffüllen, so dass während des Betriebs mit der Einsatzmischung zuerst der Vorratsbehälter und anschließend der Dosierbehälter mit dem Folgematerial bzw. der Folgemischung beaufschlagt wird, während durch den Extruder noch das Ende der aktuellen Rezepturbedingungen mit der Einsatzmischung bearbeitet wird. Mit anderen Worten wird der obere Teil der Vorlagevorrichtung nun bereits auf die Folgemischung vorbereitet, so dass der abschließende Teil, also das Auffüllen des Mischbereichs der Mischvorrichtung mit der Folgemischung, deutlich schneller und damit effizienter durchgeführt werden kann. Dabei sind auch die einzelnen Schritte alleine als Vorbereitungsschritte denkbar, um bereits den Kerngedanken der Effizienzsteigerung vorzugsweise in automatischer Ausführung gewährleisten zu können.

Ein weiterer Vorteil ist es, wenn bei einem erfindungsgemäßen Verfahren zur Vorbereitung des Materialwechsels der Füllstand in dem wenigstens einen Vorratsbehälter und/oder der Füllstand in dem Dosierbehälter reduziert wird. Üblicherweise werden die Vorratsbehälter aus großen Containern oder Sackgebinden, zum Beispiel mithilfe einer Saugförderung, mit dem jeweiligen Material für die Einsatzmischung bzw. die Folgemischung beaufschlagt. Damit stellen sowohl die Dosierbehälter als auch der Vorratsbehälter eine Vorlage dar, welche mit einem entsprechenden Füllstand versehen ist. Entsprechende Füllstandsensoren können eine Auskunft über diese Füllstandhöhe geben. Zu Ende der Rezeptur der Einsatzmischung, welches Ende über die Prozesssteuerung bekannt ist, kann diese Vorlagemenge bereits reduziert werden, so dass die Reduktion bzw. das Leeren des Vorratsbehälters und/oder das Leeren des Dosierbehälters deutlich schneller für den Materialwechsel durchgeführt werden kann. Die im voranstehenden Absatz beschriebene Kaskade kann durch diese Vorbereitung des Materialwechsels noch schneller und noch effizienter durchgeführt werden.

Darüber hinaus von Vorteil kann es sein, wenn bei einem erfindungsgemäßen Verfahren während und/oder nach dem Auffüllen des Mischbereichs mit der Folgemischung wenigstens ein Produktionsparameter des Extruders an die Folgemischung angepasst wird. Auch dies kann mittels einer Kontrollvorrichtung automatisch erfolgen. Darunter ist zu verstehen, dass Produktionsparameter, wie zum Beispiel die Produktionsgeschwindigkeit und/oder das Temperaturprofil im Extruder, an die entsprechende Folgemischung und die darin eingesetzten Einzelkomponenten angepasst werden. Die Vorbereitung, insbesondere für ein verändertes Temperaturprofil, erlaubt es, dass zu Ende einer Rezeptur diese Umstellung bereits angedeutet bzw. begonnen wird, um zum Start der neuen Rezeptur mit der Folgemischung mit möglichst idealen Temperaturbedingungen bzw. Produktionsparametern die Produktion durchführen zu können.

Ebenfalls Gegenstand der vorliegenden Erfindung ist eine Vorlagevorrichtung für einen Extruder, aufweisend wenigstens zwei Vorratsbehälter zur Aufnahme unterschiedlicher Einsatzmaterialien, wenigstens einen Dosierbehälter zur Aufnahme und Dosierung von Einsatzmaterialien sowie eine Mischvorrichtung zum Vermischen der Einsatzmaterialien zu einer Einsatzmischung in einem Mischbereich. Mit einem Übergabebereich ist die Übergabe der vermischten Einsatzmischung an den Extruder möglich. Mithilfe einer Kontrollvorrichtung wird ein erfindungsgemäßes Verfahren in automatisierter Weise durchgeführt werden, so dass die Vorlagevorrichtung die gleichen Vorteile mit sich bringt, wie sie ausführlich mit Bezug auf ein erfindungsgemäßes Verfahren erläutert worden sind.

Eine erfindungsgemäße Vorlagevorrichtung lässt sich dadurch weiterbilden, dass der Mischbereich und/oder der Übergabeabschnitt und/oder der Dosierbehälter und/oder der Vorratsbehälter eine Sensorvorrichtung zur Erfassung des jeweiligen Füllstandes aufweist. Eine solche Sensorvorrichtung ist in der Lage, in unterschiedlichster Weise den entsprechenden Füllstand direkt oder indirekt zu bestimmen. Einfache Füllstandsensoren sind dazu genauso in der Lage, wie dies mithilfe von Gewichtserfassung, Volumenerfassung oder durch eine entsprechende Kopplung mit der Prozesssteuerung möglich ist.

Weitere Vorteile, Merkmale und Einzelheiten der Erfindung ergeben sich aus der nachfolgenden Beschreibung, in der unter Bezugnahme auf die Zeichnungen Ausführungsbeispiele der Erfindung im Einzelnen beschrieben sind.

Es zeigen schematisch:
- Fig. 1: eine erfindungsgemäße Vorlagevorrichtung bei der Verwendung des Einsatzmaterials,
- Fig. 2: die Ausführungsform der Fig. 1 mit entleertem Vorratsbehälter,
- Fig. 3: die Ausführungsformen der Fig. 1 bis 2 mit entleertem Dosierbehälter,
- Fig. 4: die Ausführungsformen der Fig. 1 bis 3 mit aufgefülltem Mischbereich und
- Fig. 5: die Ausführungsformen der Fig. 1 bis 4 nach dem Materialwechsel.

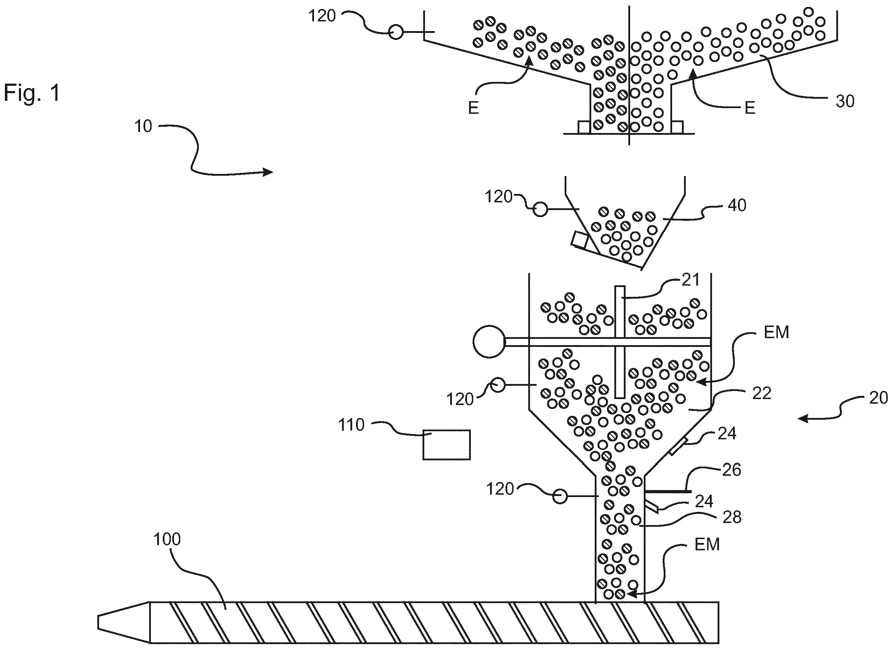

Anhand der Fig. 1 bis 5 wird näher erläutert, wie ein erfindungsgemäßes Verfahren abläuft.

Ausgangspunkt ist dabei ein in Betrieb befindlicher Extruder 100, welcher durch die Vorlagevorrichtung 10 mit einer Einsatzmischung EM versorgt wird.

Um die Einsatzmischung EM zur Verfügung zu stellen, ist in der Vorlagevorrichtung 10 eine Mehrzahl von einzelnen Vorratsbehältern 30, hier zwei Stück, vorgesehen. In jedem dieser Vorratsbehälter 30 ist ein Einsatzmaterial E sortenrein angeordnet. Mit schematisch dargestellten Schiebern ist es nun möglich, das jeweilige Einsatzmaterial E sequenziell hintereinander in einen Dosierbehälter 40 einzubringen. Der Dosierbehälter 40 kann mit einer Waage und/oder einem Füllstandsensor als Sensorvorrichtung 120 ausgestattet sein. In dem Dosierbehälter 40 wird also durch das sequenzielle Einbringen der sortenreinen Einsatzmaterialien E ein schichtweiser Aufbau dieser einzelnen Einsatzmaterialien E erzeugt. Anschließend erfolgt ebenfalls durch ein Öffnen eines Schiebers das Ablassen dieser einzelnen Einsatzmaterialien E in schichtförmiger Weise in die Mischvorrichtung 20 und dort in den Mischbereich 22. Mithilfe eines hier dargestellten mechanischen Mischers 21 erfolgt die Durchmischung der einzelnen Einsatzmaterialien E zur Einsatzmischung EM, welche über den Übergabebereich 28 dem Extruder 100 zugeführt wird.

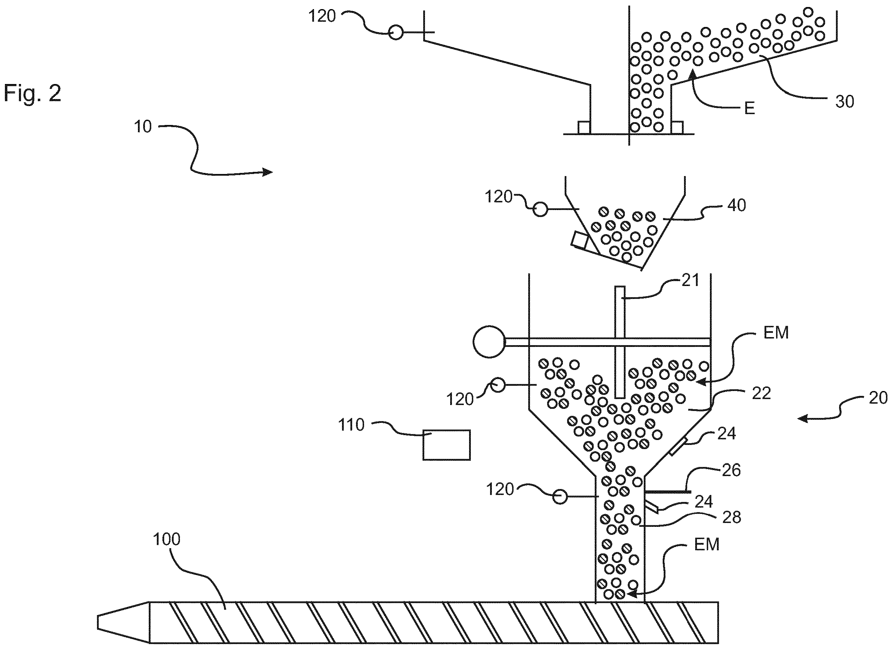

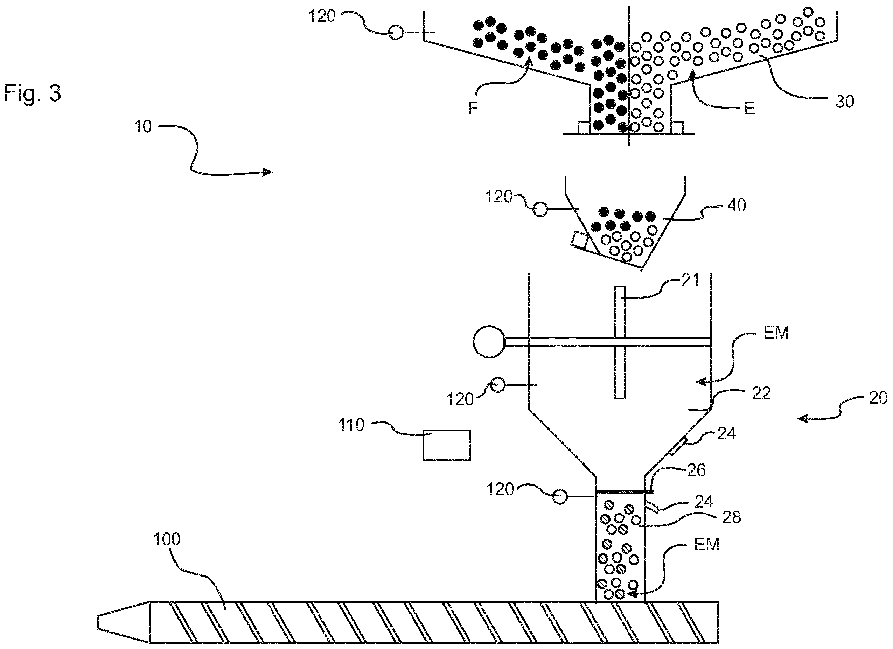

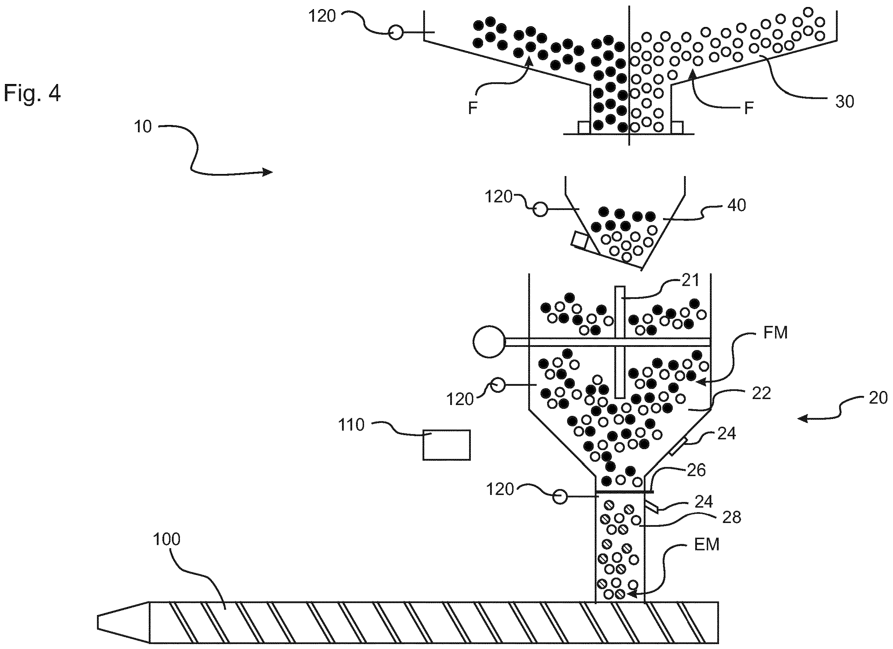

Wird nun eine Materialwechselanforderung erkannt, so wird bei der Ausführung des Verfahrens eine Vielzahl von Schritten nötig. Kerngedanke ist es, dass über die Fig. 2 und 3 der Mischbereich 22 der Mischvorrichtung 20 leerläuft. Das Leerlaufen erfolgt hier durch die Weiterverarbeitung durch den Extruder 100 und das Vermeiden eines Nachfüllens über den Dosierbehälter 40. Selbstverständlich ist zusätzlich oder alternativ auch ein Leerlaufen über die separate Ablassöffnung 24 denkbar. Eine solche Ablassöffnung 24 kann zusätzlich oder alternativ auch im Übergabebereich 28 vorgesehen sein. Sobald nun der Mischbereich 22 leergelaufen ist, kann ein Nachfüllen in diesem Mischbereich 22 erfolgen. Für dieses Nachfüllen ist in optionaler Weise bei der Ausführungsform der Fig. 2 und 3 bereits ein vorbereitender Schritt oberhalb der Mischvorrichtung 20 durchgeführt worden. So wurde in Fig. 2 das Einsatzmaterial E im rechten Vorratsbehälter 30 leergesaugt oder gänzlich abgelassen, so dass gemäß Fig. 3 nun das Folgematerial F eingebracht werden konnte. Gleiches führt dazu, dass auch in der Dosiervorrichtung 40 nun ausgehend von den beiden Folgematerialien F aus den Vorratsbehältern 30 in Fig. 4 der Dosierbehälter 40 entsprechend mit der neuen Materialmischung der Folgemischung FM bestückt werden kann. Nun erfolgt das Ablassen in den Mischbereich 22 und dort eine Durchmischung mit dem Mischer 21, um die Folgemischung FM herzustellen.

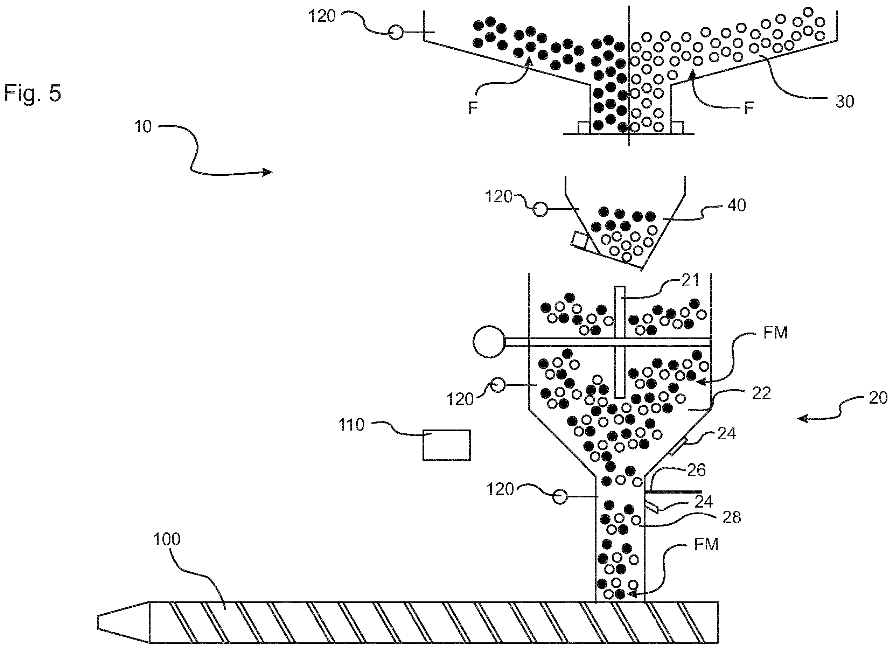

Bei der Ausführungsform der Fig. 1 bis 5 ist darüber hinaus noch ein Verschlussmittel 26 vorgesehen, um ein Abtrennen des Übergabebereichs 28 von dem Mischbereich 22 zu erzeugen. Damit kann die Durchmischung im Mischbereich 22 für die Folgemischung FM bereits dann erfolgen, wenn im Übergabebereich 28 noch Einsatzmischung EM dem Extruder 100 zugeführt wird. Im abschließenden Fall, wenn das Verschlussmittel 26 gemäß Fig. 5 geöffnet wird, dringt nun sortenrein und durchmischt die Folgemischung FM über den Übergangsbereich 28 in den Extruder 100 ein, und die Produktion mit der nachfolgenden Rezeptur der Folgemischung kann begonnen werden.

### Bezugszeichenliste

- 10: Vorlagevorrichtung
- 20: Mischvorrichtung
- 21: Mischer
- 22: Mischbereich
- 24: Ablassöffnung
- 26: Verschlussmittel
- 28: Übergabebereich
- 30: Vorratsbehälter
- 40: Dosierbehälter

- 100: Extruder
- 110: Kontrollvorrichtung
- 120: Sensorvorrichtung

- E: Einsatzmaterial
- EM: Einsatzmischung
- F: Folgematerial
- FM: Folgemischung

## Patentansprüche

1. Verfahren zur Durchführung eines Materialwechsels von einer Einsatzmischung (EM) zu einer Folgemischung (FM) bei einer Vorlagevorrichtung (10) eines Extruders (100), aufweisend die folgenden Schritte:
- Erkennen einer Wechselanforderung zur Durchführung des Materialwechsels,
- Leeren eines Mischbereichs (22) einer Mischvorrichtung (20) der Vorlagevorrichtung (10),
- Erkennen der Beendigung des Leerens des Mischbereichs (22),
- Auffüllen des Mischbereichs (22) der Mischvorrichtung (20) mit der Folgemischung (FM) nach der erkannten Beendigung des Leerens,
wobei vor dem Leeren des Mischbereichs (22) wenigstens einer der folgenden Schritte durchgeführt wird:
- Leeren wenigstens eines Vorratsbehälters (30), welcher der Mischvorrichtung (20) vorgelagert ist,
- Auffüllen des Vorratsbehälters (30) mit einem Folgematerial (F) für die Folgemischung (FM),
- Leeren eines Dosierbehälters (40), welcher der Mischvorrichtung (20) vorgelagert und dem Vorratsbehälter (30) nachgelagert ist,
- Auffüllen des Dosierbehälters (40) aus dem wenigstens einen Vorratsbehälter (30) mit dem Folgematerial (F) der Folgemischung (FM),
wobei ein kaskadiertes Auffüllen erfolgt, so dass während des Betriebs mit der Einsatzmischung (EM) zuerst der Vorratsbehälter und anschließend der Dosierbehälter mit dem Folgematerial (F) bzw. der Folgemischung (FM) beaufschlagt wird, während durch den Extruder noch das Ende der aktuellen Rezepturbedingungen mit der Einsatzmischung (EM) bearbeitet wird,
**dadurch gekennzeichnet, dass**
der Füllstand in einem Übergabebereich (28) der Mischvorrichtung (20) zum Extruder (100) überwacht wird, wobei bei einer Unterschreitung eines Mindestfüllstandes in dem Übergabebereich (28) wenigstens einer der folgenden Schritte durchgeführt wird:
- Sofortiges Auffüllen des Mischbereichs (22) und/oder des Übergabebereichs (28)
- Reduktion der Produktionsgeschwindigkeit des Extruders (100)
- Stopp der Produktion des Extruders (100).

2. Verfahren nach Anspruch 1, **dadurch gekennzeichnet, dass** für den Schritt des Leerens des Mischbereichs (22) wenigstens die folgende Teilschritte ausgeführt werden:
- Ablassen der Einsatzmischung (EM) aus dem Mischbereich (22) über eine Ablassöffnung (24),
- Leerlaufen der Einsatzmischung (EM) in den Extruder (100).

3. Verfahren nach einem der vorangegangenen Ansprüche, **dadurch gekennzeichnet, dass** während des Auffüllens des Mischbereichs (22) mit der Folgemischung (FM) der Mischbereich (22) mit einem Verschlussmittel (26) von einem Übergabebereich (28) der Mischvorrichtung (20) zum Extruder (100) getrennt ist.

4. Verfahren nach Anspruch 3, **dadurch gekennzeichnet, dass** nach und/oder während dem Auffüllen mit der Folgemischung (FM) ein Mischer (21) der Mischvorrichtung (20) betrieben wird, um die Folgemischung (FM) zu durchmischen, insbesondere bevor das Verschlussmittel (26) zu dem Übergabebereich (28) geöffnet wird.

5. Verfahren nach einem der vorangegangenen Ansprüche, **dadurch gekennzeichnet, dass** vor dem Beginn des Auffüllens des Mischbereichs (22) mit der Folgemischung (FM) der Mischbereich (22), insbesondere ein Mischer (21) im Mischbereich (22), gereinigt wird.

6. Verfahren nach einem der vorangegangenen Ansprüche, **dadurch gekennzeichnet, dass** während der Durchführung der Schritte des Leerens des Mischbereichs (22) und/oder des Auffüllens des Mischbereichs (22) die Produktionsgeschwindigkeit des Extruders (100) reduziert wird.

7. Verfahren nach Anspruch 1, **dadurch gekennzeichnet, dass** zur Vorbereitung des Materialwechsels der Füllstand in dem wenigstens einen Vorratsbehälter (30) und/oder der Füllstand in dem Dosierbehälter (40) reduziert wird.

8. Verfahren nach einem der vorangegangenen Ansprüche, **dadurch gekennzeichnet, dass** während und/oder nach dem Auffüllen des Mischbereichs (22) mit der Folgemischung (FM) wenigstens ein Produktionsparameter des Extruders (100) an die Folgemischung (FM) angepasst wird.

9. Vorlagevorrichtung (10) für einen Extruder (100), aufweisend wenigstens zwei Vorratsbehälter (30) zur Aufnahme unterschiedlicher Einsatzmaterialien (E), wenigstens einen Dosierbehälter (40) zur Aufnahme und Dosierung von Einsatzmaterialien (E) sowie eine Mischvorrichtung (20) zum Vermischen der Einsatzmaterialien (E) zu einer Einsatzmischung (EM) in einem Mischbereich (22) und mit einem Übergabebereich (28) zur Übergabe der Einsatzmischung (EM) an den Extruder (100), weiter aufweisend eine Kontrollvorrichtung (110), die zur automatisierten Durchführung eines Verfahrens mit den Merkmalen eines der Ansprüche 1 bis 8 eingerichtet ist.

10. Vorlagevorrichtung (10) nach Anspruch 9, **dadurch gekennzeichnet, dass** der Mischbereich (22) und/oder der Übergabeabschnitt (28) und/oder der Dosierbehälter (40) und/oder der Vorratsbehälter (30) eine Sensorvorrichtung (120) zur Erfassung des jeweiligen Füllstandes aufweist.

## Claims

1. A method for carrying out a change in material from a feed mixture (EM) to a subsequent mixture (FM) in a feed device (10) of an extruder (100), comprising the following steps:
- detecting a change request for carrying out the change in material,
- emptying a mixing area (22) of a mixing device (20) of the feed device (10),
- identifying the completion of the emptying of the mixing area (22),
- filling the mixing area (22) of the mixing device (20) with the subsequent mixture (FM) after completion of the emptying has been identified,
wherein before emptying the mixing area (22) at least one of the following steps is carried out:
- emptying at least one storage container (30), which is upstream of the mixing device (20),
- filling the storage container (30) with a subsequent material (F) for the subsequent mixture (FM),
- emptying a metering container (40), which is upstream of the mixing device (20) and is downstream of the storage container (30),
- filling the metering container (40) from the at least one storage container (30) with the subsequent material (F) of the subsequent mixture (FM),
wherein a cascaded filling takes place, so that during the operation with the feed mixture (EM) first the storage container and then the metering container is charged with the subsequent material (F) or the subsequent mixture (FM), while the end of the current formula conditions with the feed mixture (EM) is still being processed by the extruder,
**characterized in that**
the filling level is monitored in a transfer region (28) of the mixing device (20) to the extruder (100), wherein when a minimum filling level is undershot in the transfer region (28) at least one of the following steps is carried out:
- immediate filling of the mixing area (22) and/or the transfer region (28)
- reduction of the production speed of the extruder (100)
- stopping the production of the extruder (100).

2. The method according to Claim 1, **characterized in that,** for the step of emptying the mixing area (22), at least the following sub-steps are carried out:
- discharging the feed mixture (EM) from the mixing area (22) via a discharge opening (24),
- idling the feed mixture (EM) into the extruder (100).

3. The method according to any one of the preceding claims, **characterized in that,** during the filling of the mixing area (22) with the subsequent mixture (FM), the mixing area (22) is separated from a transfer region (28) of the mixing device (20) to the extruder (100) with a closure means (26).

4. The method according to claim 3, **characterized in that,** after and/or during the filling with the subsequent mixture (FM), a mixer (21) of the mixing device (20) is operated, in order to mix the subsequent mixture (FM), in particular before the closure means (26) is opened to the transfer region (28).

5. The method according to any one of the preceding claims, **characterized in that,** before the start of the filling of the mixing area (22) with the subsequent mixture (FM), the mixing area (22), in particular a mixer (21) in the mixing area (22) is cleaned.

6. The method according to any one of the preceding claims, **characterized in that** during the execution of the steps of emptying the mixing area (22) and/or filling the mixing area (22), the production speed of the extruder (100) is reduced.

7. The method according to claim 1, **characterized in that,** in order to prepare the change in material, the filling level in the at least one storage container (30) and/or the filling level in the metering container (40) is reduced.

8. The method according to any one of the preceding claims, **characterized in that,** during and/or after the filling of the mixing area (22) with the subsequent mixture (FM), at least one production parameter of the extruder (100) is adapted to the subsequent mixture (FM).

9. A feed device (10) for an extruder (100), having at least two storage containers (30) for receiving different feed materials (E), at least one metering container (40) for receiving and metering feed materials (E), and a mixing device (20) for mixing the feed materials (E) to form a feed mixture (EM) in a mixing area (22) and having transfer region (28) for transferring the feed mixture (EM) to the extruder (100), further comprising a control device (110), which is set up for the automated execution of a method having the features of any one of claims 1 to 8.

10. The feed device (10) according to claim 9, **characterized in that,** the mixing area (22) and/or the transfer section (28) and/or the metering container (40) and/or the storage container (30) has a sensor device (120) for detecting the respective filling level.

## Revendications

1. Procédé de réalisation d'un changement de matériau d'un mélange de charge (EM) à un mélange de suite (FM) dans un dispositif d'alimentation (10) d'une extrudeuse (100), comprenant les étapes suivantes :
- détection d'une demande de changement pour la réalisation du changement de matériau,
- vidage d'une zone de mélange (22) d'un dispositif de mélange (20) du dispositif d'alimentation (10),
- détection de la fin du vidage de la zone de mélange (22),
- remplissage de la zone de mélange (22) du dispositif de mélange (20) avec le mélange de suite (FM) après la fin détectée du vidage,
dans lequel, avant le vidage de la zone de mélange (22), au moins une des étapes suivantes est exécutée :
- vidage d'au moins un réservoir (30) qui est placé en amont du dispositif de mélange (20),
- remplissage du réservoir (30) avec un matériau de suite (F) pour le mélange de suite (FM),
- vidage d'un récipient de dosage (40) qui est placé en amont du dispositif de mélange (20) et en aval du réservoir (30),
- remplissage du récipient de dosage (40) à partir de l'au moins un réservoir (30) avec le matériau de suite (F) du mélange de suite (FM),
dans lequel un remplissage en cascade a lieu, de sorte que, pendant le fonctionnement avec le mélange de charge (EM), le réservoir d'abord et le récipient de dosage ensuite sont alimentés avec le matériau de suite (F) respectivement le mélange de suite (FM), tandis que l'extrudeuse traite encore la fin des conditions de recette actuelle avec le mélange de charge (EM),
**caractérisé en ce que**
le niveau de remplissage dans une zone de transfert (28) du dispositif de mélange (20) vers l'extrudeuse (100) est surveillé, dans lequel, lors d'un passage en dessous d'une niveau de remplissage minimal dans la zone de transfert (28), au moins une des étapes suivantes est exécutée :
- remplissage immédiat de la zone de mélange (22) et/ou de la zone de transfert (28)
- réduction de la vitesse de production de l'extrudeuse (100),
- arrêt de la production de l'extrudeuse (100).

2. Procédé selon la revendication 1, **caractérisé en ce que**, pour l'étape de vidage de la zone de mélange (22), au moins les étapes partielles suivantes sont exécutées :
- évacuation du mélange de charge (EM) hors de la zone de mélange (22) par une ouverture d'évacuation (24),
- marche à vide du mélange de charge (EM) vers l'extrudeuse (100).

3. Procédé selon l'une des revendications précédentes, **caractérisé en ce que**, pendant le remplissage de la zone de mélange (22) avec le mélange de suite (FM), la zone de mélange (22) est séparée avec un moyen de fermeture (26) d'une zone de transfert (28) du dispositif de mélange (20) vers l'extrudeuse (100).

4. Procédé selon la revendication 3, **caractérisé en ce que**, après et/ou pendant le remplissage avec le mélange de suite (FM), un mélangeur (21) du dispositif de mélange (20) est actionné, afin d'homogénéiser le mélange de suite (FM), plus particulièrement avant que le moyen de fermeture (26) par rapport à la zone de transfert (28) soit ouvert.

5. Procédé selon l'une des revendications précédentes, **caractérisé en ce que**, avant le début du remplissage de la zone de mélange (22) avec le mélange de suite (FM), la zone de mélange (22), plus particulièrement un mélangeur (21) dans la zone de mélange (22), est nettoyée.

6. Procédé selon l'une des revendications précédentes, **caractérisé en ce que**, pendant l'exécution des étapes de vidage de la zone de mélange (22) et/ou de remplissage de la zone de mélange (22), la vitesse de production de l'extrudeuse (100) est réduite.

7. Procédé selon la revendication 1, **caractérisé en ce que**, pour la préparation du changement de matériau, le niveau de remplissage dans l'au moins un réservoir (30) est/ou le niveau de remplissage dans le récipient de dosage (40) est réduit.

8. Procédé selon l'une des revendications précédentes, **caractérisé en ce que**, pendant et/ou après le remplissage de la zone de mélange (22) avec le mélange de suite (FM), au moins un paramètre de production de l'extrudeuse (100) est adapté au mélange de suite (FM).

9. Dispositif d'alimentation (10) pour une extrudeuse (100), comprenant au moins deux réservoirs (30) pour le logement de différents matériaux de charge (E), au moins un récipient de dosage (40) pour le logement et le dosage de matériaux de charge (E) ainsi qu'un dispositif de mélange (20) pour le mélange des matériaux de charge (E) en un mélange de charge (22) et avec une zone de transfert (28) pour le transfert du mélange de charge (EM) vers l'extrudeuse (100), comprenant en outre un dispositif de contrôle (110) qui est conçue pour l'exécution automatique d'un procédé avec les caractéristiques d'une des revendications 1 à 8.

10. Dispositif d'alimentation (10) selon la revendication 9, **caractérisé en ce que** la zone de mélange (22) et/ou la portion de transfert (28) et/ou le récipient de dosage (40) et/ou le réservoir (30) comprend un dispositif de capteur (120) pour la détection du niveau de remplissage respectif.
